# EUROPÄISCHE PATENTANMELDUNG

(11) **EP 0 858 733 A1**
(43) Veröffentlichungstag der Anmeldung: **19.08.1998**
(21) Anmeldenummer: 98102338.5
(22) Anmeldetag: 11.02.1998
(51) Int. Cl.: A01F 15/14

(54) **Garnsicherungsvorrichtung**

(30) Priorität: 14.02.1997 DE 19705584
(71) Anmelder: Deere & Company, Moline, Illinois 61265-8098 (US)
(72) Erfinder: Viaud, Jean, 70100 Gray (FR)
(74) Vertreter: Feldmann, Bernhard

(57) **Zusammenfassung**

Herkömmlich werden als Rundballen ausgebildete Ballen (14) von Garn (20) umschlungen, um sie zusammenzuhalten. Damit das lose Garnende nicht von dem Ballen (14) während seiner weiteren Handhabung herabfällt, ist es bereits bekannt, das Garnende mittels eines Klebestreifens zu sichern oder es in die Stirnfläche des Ballens (14) einzudrücken. Die Zufuhr eines Klebestreifens und das Eindrücken des Garns in die Stirnfläche ist technisch nicht einfach zu realisieren.

Es wird eine Garnsicherungsvorrichtung (18) vorgeschlagen, die auf einem Kolben (34) eines Motors (28) einen Stempel (32) mit einem Garngreifer (38) trägt, der unter die Umfangsfläche des Ballens gestoßen wird, wobei eine Drehung des Ballens (14) unterbleibt. Sobald der Stempel (32) mit einer Spitze (36) und dem Garngreifer (38) tief genug in den Ballen (14) hineingedrückt worden ist, wird eine Schneidvorrichtung (54) aktiviert, die das Garn (20) durchtrennt. Schließlich wird der Stempel (32) aus dem Ballen (14) in eine Außerbetriebsstellung herausgezogen.

Garnsicherungsvorrichtungen werden an landwirtschaftlichen Rundballenpressen verwendet.

## Beschreibung

Die Erfindung betrifft eine Garnsicherungsvorrichtung zum Sichern loser Enden von Garn an einem Ballen in einer Presse, insbesondere einer landwirtschaftlich nutzbaren Rundballenpresse, wobei das Garn unter die Oberfläche des Ballens eingedrückt wird.

In herkömmlicher Weise werden Rundballen in einer Rundballenpresse mit Garn umwickelt, um zu verhindern, daß das gewickelte Erntegut nach dem Verlassen des Preßraums auseinander fällt. Das Garn wird lediglich auf die Umfangsfläche des Ballens aufgewickelt, so daß das Garnende nicht befestigt wird und nur lose aufliegt. Nach dem Auswerfen des Ballens aus dem Preßraum kann es daher geschehen, daß sich je nach der Drehrichtung des Ballens das Garnende abwickelt und der Ballen auseinander fällt, bzw. das lose Garnende bei der weiteren Handhabung des Ballens stört.

Die DE-A1-41 32 664 offenbart eine Rundballenpresse mit einem Zackenrad in einer Seitenwand eines Preßraums. Dieses Zackenrad weist eine Nut auf, in die Garn einführt werden kann, und ragt mit ihren Zacken in den Preßraum, wo es von dem sich drehenden Rundballen mitgenommen werden kann. Während der Drehbewegung des Ballens und des Zackenrades wird Garn in die Stirnfläche eingenäht, um das Herabfallen loser Garnenden zu vermeiden.

Das der Erfindung zugrunde liegende Problem wird darin gesehen, daß die Einarbeitung von Garn an den Stirnseiten nicht einfach durchzuführen ist

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird der Freiraum zwischen Preßelementen oder am Einlaß zu dem Preßraum dazu benutzt, das Garn in den Ballen zu stecken. Es entfällt auch die Umlenkung des Garns an die Stirnseite des Ballens. Desweiteren erfolgt das Trennen des Garns und das Einstoßen abhängig voneinander, so daß das Garnende sicher in dem Ballen steckt. Die Verwendung einer Spitze ermöglicht ein Eindringen des Stempels auch in Oberflächen hoher Dichte.

Der Trennvorgang des Garns kann einfach herbeigeführt werden, wenn eine Relativbewegung zwischen der Spitze und dem Kolben hierfür ausgenutzt wird, die immer eintritt, wenn die Spitze in dem Ballen auf einen Widerstand stößt während der Kolben weiterbewegt wird. Die Drehbewegung der Schneidvorrichtung kann direkt aus der Verschiebung der Spitze gegenüber dem Kolben durch mechanische Anschläge oder dergleichen oder durch Sensoren eingeleitet werden, die diese Relativbewegung erfassen.

Eine effiziente Art, die Schneidvorrichtung zu betätigen ist in der Verwendung zweier aufeinander gleitender Kurven oder Schrägen zu sehen, die an der Hülse und dem Kolben oder einem auf diesem befestigten Rohr vorgesehen sind und infolge der Axialbewegung zwischen der Spitze und dem Kolben eine Drehbewegung hervorrufen. Mittels der Neigung der Kurve oder Schräge kann der Drehwinkel bestimmt werden. Die Schneidvorrichtung gewährt einen sauberen Schnitt, wenn ein in ihr enthaltenes Messer stabil ausgebildet ist und an einer Gegenschneide oder Anlage an der Spitze entlang gleitet.

Die Verwendung einer Feder zum Verstellen der Hülse gegenüber der Spitze stellt sicher, daß bei einem nachfolgenden Garnsicherungsvorgang der Eintritt des Garns in den Garngreifer nicht von der Schneidvorrichtung blockiert wird.

Um sicherzustellen, daß der Stempel mit dem Garngreifer stets die gleiche Stellung einnimmt, in der der Garngreifer das Garn sicher ergreifen kann, ist eine Verdrehsicherung zwischen der Spitze und dem Kolben vorgesehen, wobei zur Führung der Spitze gegenüber dem Kolben am einfachsten eine Teleskopverbindung aus einem Rohr auf dem Kolben und einer Welle an der Spitze gebildet wird. Eine in der Teleskopverbindung befindliche Druckfeder stellt sicher, daß das Teleskop immer dann auseinander gefahren ist, wenn die Spitze nicht von dem Ballen beaufschlagt ist, so daß auch die Schneidvorrichtung wieder ihre Außerbetriebsstellung einnimmt. Die Drehsicherung kann auf vielfältige Art und Weise erfolgen, z. B. mittels eines in einem axial verlaufenden Längsschlitz gleitenden Führungsbolzens. Allerdings kann auch eine Profilverbindung oder dergleichen verwendet werden.

Zur Vermeidung evtl. Schäden an der Garnsicherungsvorrichtung ist eine Steuervorrichtung vorgesehen, die das Stillstehen des Ballens abwartet, bevor der Stempel bzw. dessen Spitze in den Ballen eingedrückt wird.

Wenn die Steuervorrichtung auch die Bindevorrichtung überwacht, bzw. die Stellung der Garnführung mittels Sensoren erfaßt, ist ein sicheres Ergreifen des Garns durch den Stempel gewährleistet.

Eine einfache Ausführung des Garngreifers wird in dem Einbringen einer Nut in die Spitze gesehen, die sich vorzugsweise von dem Bereich kleinsten bis zu dem Bereich größten Durchmessers erstreckt und somit das Garn am vordersten Ende des Stempels erfaßt, d. h. es am weitesten in den Ballen hineinsteckt.

Um den Einfluß von Erschütterungen auf den Strang während des Betriebs zu minimieren und eine stets eindeutige Lage des Strangs zu erreichen, kann ein Führungsfinger zwischen der Garnführung bzw. dessen Auslaßöffnung und dem Ballen vorgesehen werden, der den Strang stets in einer Lage hält, in der er von dem Stempel erfaßt wird.

In der Zeichnung ist ein nachfolgend näher beschriebenes Ausführungsbeispiel der Erfindung dargestellt. Es zeigt:
- Fig. 1: eine Rundballenpresse mit einer Vorrichtung zum Sichern loser Enden von Garn in schematischer und perspektivischer Ansicht von vorn, wobei sich die Vorrichtung in einer Außerbetriebsstellung befindet,
- Fig. 2: die Rundballenpresse nach Figur 1, wobei sich die Vorrichtung in einer Betriebsstellung befindet, und

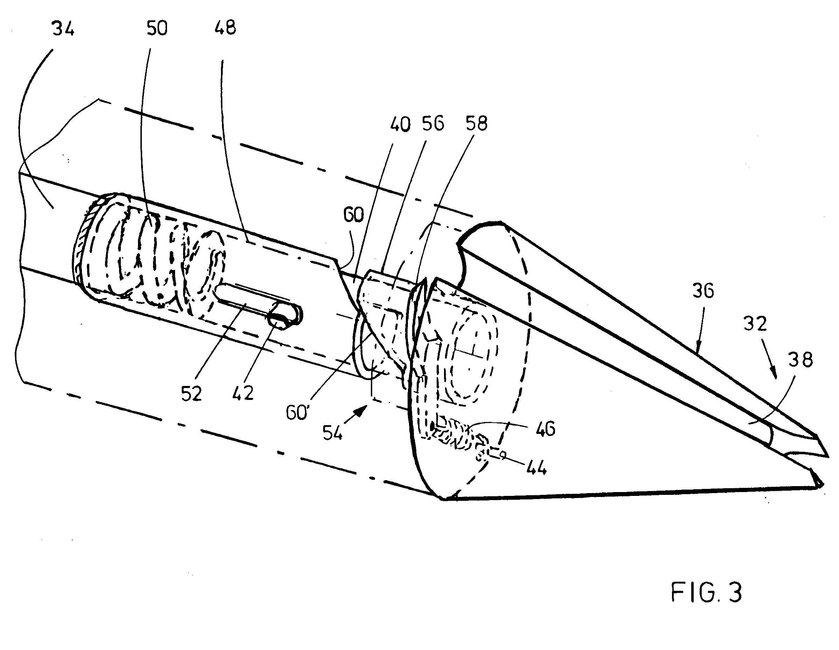

- Fig. 3: die Vorrichtung nach den Figuren 1 und 2 in größerer Darstellung.

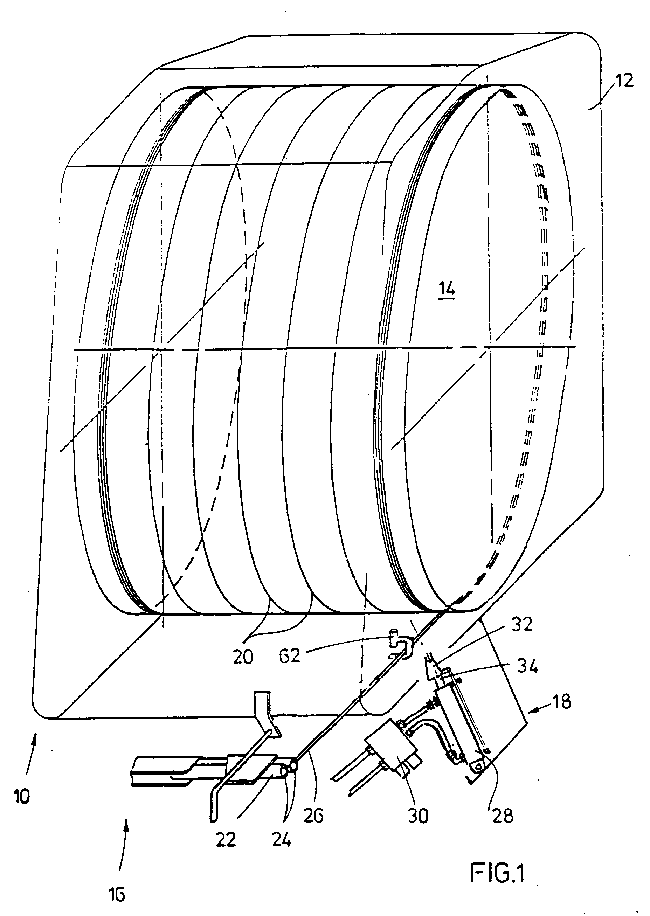

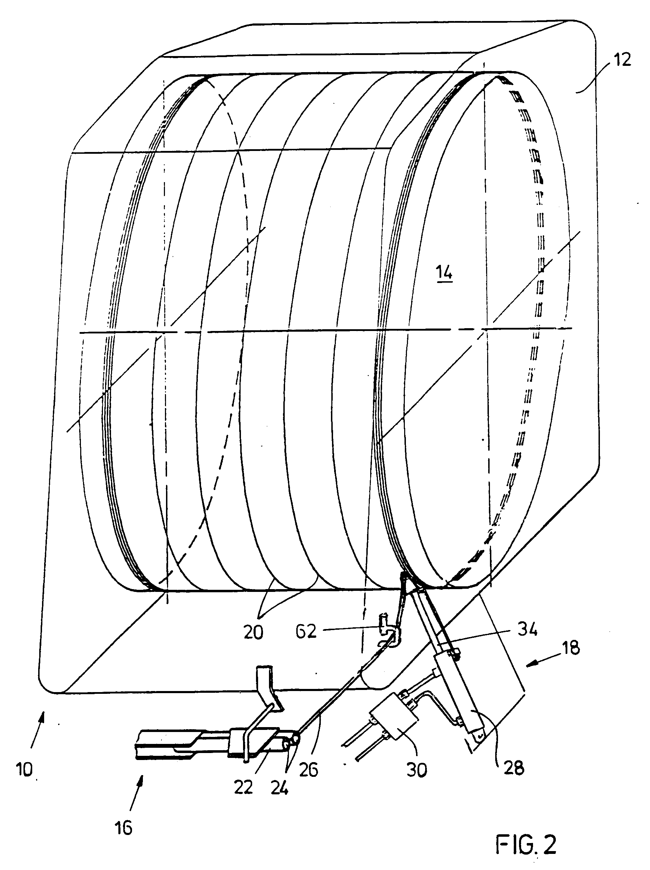

In den Figuren 1 und 2 ist eine Rundballenpresse 10 schematisch in ihren Umrissen angedeutet, wobei im wesentlichen ein Rahmen 12 mit einem sich darin befindlichen Ballen 14, eine Bindevorrichtung 16 und eine Garnsicherungsvorrichtung 18 zu sehen ist.

Die Rundballenpresse 10 ist im wesentlichen von herkömmlicher Bauart und kann sowohl als Festkammerpresse wie auch als Presse mit variablem Preßraum ausgebildet sein.

Der Rahmen 12 ist ebenfalls herkömmlich ausgebildet, wobei er nicht gezeigte Mittel aufweist, die geeignet sind, die Garnsicherungsvorrichtung 18 zu befestigen und ihr Zugang zu dem den Ballen 14 enthaltenden Preßraum zu verschaffen.

Der Ballen 14 wird in dem Preßraum bis zu einer gewünschten oder maximalen Größe aus Erntegut gerollt und gegen Auseinanderfallen durch Garn 20 gesichert, das auf die Umfangsfläche des Ballens 14 aufwickelt wird. Der Ballen 14 wird dadurch gebildet, daß er von bekannten aber in der Zeichnung nicht dargestellten Preßelementen während seines Aufbaus und während des Bindevorgangs in Drehung gehalten, während er zum Sichern der Garnenden angehalten wird und ruht.

Die Bindevorrichtung 16 enthält eine Garnführung 22, die vereinfacht als ein in einer horizontalen Ebene schwenkbarer Bindearm mit zwei Garnauslaßöffnungen 24 ausgebildet ist, die am Ende des Bindevorgangs bei dem dargestellten Ausführungsbeispiel im Seitenbereich des Ballens 14 positioniert werden, so daß sich ein Strang 26 des Garns 20 zwischen jeder der Garnauslaßöffnungen 24 und dem seitlichen Randbereich des Ballens 14 erstreckt und zwar aufgrund der bestehenden Spannung nahezu als eine Gerade.

Während in der Zeichnung nur eine Bindevorrichtung 16 mit nur einer Garnführung 22 dargestellt ist, können natürlich auch mehrere Garnführungen 22 vorgesehen werden, die in unterschiedlichster Weise entlang der Längsachse des Ballens 14 geführt werden können. Desweiteren kann die Bindevorrichtung 16 auch so ausgebildet und/oder betrieben werden, daß der Strang 26 am Bindeende nicht auf einer Seite, sondern in der Mitte verläuft, oder daß auf beiden Seiten des Ballens jeweils ein Strang 26 des Garns 20 verläuft.

Abweichend von bekannten Bindevorrichtungen ist keine Schneidvorrichtung vorhanden, die den Strang zu einem gewünschten Zeitpunkt durchtrennt.

Die Garnsicherungsvorrichtung 18 enthält einen Motor 28, eine Steuervorrichtung 30 und einen Stempel 32.

Die Garnsicherungsvorrichtung 18 kann sowohl radial zu der Umfangsfläche des Ballens 14 als leicht geneigt zu der Radialen ausgerichtet sein. Ferner kann dessen Ausrichtung so gewählt sein, daß sich der Stempel 32 geneigt zu der Längsachse bewegt und er somit nicht tief in den Kern des Ballens 14 bewegt wird, sondern flach unter dessen Oberfläche verläuft.

Der Motor 32 ist in dem dargestellten Ausführungsbeispiel als ein doppeltwirkender Hydraulikzylinder ausgebildet, der mittels Druckflüssigkeit aus- und eingefahren werden kann. Alternativ kann auch ein Pneumatikmotor oder Elektromotor verwendet werden. Schließlich ist auch die Verwendung eines federgespannten mechanischen Gestänges denkbar.

Die Steuerung der Bewegung des Motors 28 erfolgt über die Steuervorrichtung 30, die mechanisch, hydraulisch oder elektrisch erfolgt. Der Betrieb der Steuervorrichtung erfolgt abhängig von der Stellung der Garnführung 22 und dem Bewegungszustand des Ballens 14. Demnach wird der Stempel 32 in der nachfolgend beschriebenen Weise erst dann betätigt, wenn der Ballen 14 zum Stillstand gekommen ist und die Garnführungen 22 ihre Endstellung eingenommen haben. Diese Bedingungen können mit Sensoren erfragt werden, oder eine Bedienungsperson stellt direkt oder über eine Anzeigevorrichtung fest, daß die Bedingungen erfüllt sind und aktiviert die Steuervorrichtung 30. In einer besonderen Ausführung enthält die Steuervorrichtung 30 einen programmierbaren Kleinrechner.

Der Stempel 32 ist auf einen Kolben 34 des Motors 28 aufgebracht, wenn es auch denkbar ist, diesen auf dem Zylinder zu befestigen. Der Begriff Kolben wurde gewählt, weil damit auch andere linear bewegliche Glieder von Motoren, z. B., Elektromotoren oder Pneumatikmotoren erfaßt werden sollen. Demnach ist der Stempel mittels des Motors 28 in den Ballen 14 hinein und aus diesem heraus bewegbar, was vorzugsweiser unter einer relativ hohen Geschwindigkeit erfolgt. Aufgrund der evtl. anzutreffenden Dichte des Ballens 14 ist es ratsam den Stempel 32 wie auch den Motor 28 robust auszubilden.

An dem dem Ballen 14 zugelegen Endbereich des Stempels 32 ist eine Spitze 36 vorgesehen, die einen in die Kegelfläche eingearbeiteten Garngreifer 38 in der Form einer Nut aufweist. Der Garngreifer kann aber auch als Finger, Bügel oder dergleichen ausgebildet werden. Der Garngreifer 38 bzw. die Nut verläuft in einer durch die Längsmittenachse der Spitze 36 verlaufenden Ebene und schneidet auch die Kegelspitze. Die Weite und Tiefe des Garngreifers 38 ist so gewählt, daß der Strang 26 in ihm aufgenommen werden kann. Die Spitze 36 ist koaxial auf eine Welle 40 montiert, von der aus sich radial ein Führungsbolzen 42 erstreckt. Die Welle 40 hat einen Durchmesser, der wesentlich geringer ist als der größte Durchmesser des Kegels der Spitze 36, und ist an den Kegelboden angebracht, z. B. angeschweißt. An dem Kegelboden befindet sich schließlich ein Stift 44 zur Aufnahme einer Feder 46.

Der Stempel 32, bzw. dessen Welle 40 ist teleskopisch in einem Rohr 48 axial gelagert, wobei das Rohr 48 auf das Ende des Kolbens 34 montiert ist und von dieser verschlossen wird. Zwischen dem Kolben 34 und der Welle 40 erstreckt sich eine Druckfeder 50, die beim Einschieben des Stempels 32 in den Ballen 14 belastet wird. Parallel zu der Längsmittenachse des Rohrs 48 verläuft in dessen Wandung ein Längsschlitz 52, durch den sich der Stift 44 erstreckt. Auf diese Weise wird die Spitze 36 mit der Welle 40 von dem Stift 44 drehfest, aber axial beweglich in dem Rohr 48 gehalten und geführt. Das Rohr 48 läuft an dem dem Kolben 34 abgelegenen Endbereich schräg bzw. mit einer Kurve 60 aus.

Zwischen dem Rohr 48 und der Spitze 36 und gelagert auf der Welle 40 befindet sich eine als Rotationsmesser ausgebildete Schneidevorrichtung 54. Die Schneidvorrichtung 54 setzt sich aus einer auf der Welle 40 drehbar gelagerten Hülse 56, einem an deren Außenfläche ungefähr tangential verlaufenden Messer 58 und der Feder 46 zusammen. Das Messer 58 ist so ausgebildet und angeordnet, daß es bei Drehung der Hülse 56 an dem Garngreifer 38 vorbeigleitet und einen in dieser aufgenommenen Strang 26 durchtrennt. Hierzu verläuft die Schneide des Messers 58 auf der der Hülse 56 zugelegenen Seite. An dem der Schneide abgelegenen Ende des Messers 58 greift das andere Ende der Feder 46 an, so daß das Messer 58 stets von dem Garngreifer 38 weggedreht wird. Die Hülse 56 endet an der der Spitze 36 zugelegenen Endseite in einer radialen Ebene und kommt an dem Kegelboden zur Anlage. Auf der dem Rohr 48 zugelegenen Seite läuft die Hülse 56 wie bereits das Rohr 48, allerdings dazu passend schräg bzw. auf einer Kurve 60' aus. Aufgrund der konzentrischen Anordnung des Rohrs 48 und der Hülse 56 und der ihrer relativen Lage zueinander in der Axialrichtung liegen das Rohr 48 und die Hülse 56 mit ihren Kurven 60 und 60' aneinander und können aufeinander gleiten, wenn sie sich in bezug auf einander drehen. Aufgrund der Feder 46 wird die Hülse immer so gedreht, daß die Kurven aufeinanderliegen, und aufgrund der sich dann ergebenden Axialkomponente bewegt sich die Hülse 56 stets von dem Rohr 48 axial fort in Anlage an die Spitze 36.

Obwohl dies nicht unbedingt erforderlich ist, so enthält das dargestellte Ausführungsbeispiel einen Führungsfinger 62 zwischen der Garnauslaßöffnung 24 und dem Stempel 32, der den Strang 26 erfaßt, wenn sich die Garnführung 22 in ihrer Endstellung befindet, bzw. den Strang 26 in die geforderte Lage bringt, wenn die Garnführung 22 nach einem anderen Ausführungsbeispiel hierzu nicht bestimmt ist. Der Führungsfinger 62 führt das Garn 20 bzw. den Strang 26 derart, daß der Strang 26 sicher in den Garngreifer 38 gelangt, wenn der Stempel 32 ausgefahren wird.

Ausgehend von der vorherigen Beschreibung ergibt sich folgende Funktion.

Nachdem der Ballen 14 seine gewünschte oder maximale Größe erreicht hat, wird entweder manuell oder automatisch mittels der Steuervorrichtung 30 der Bindevorgang ausgelöst, d. h. die Garnführung 22 wird in eine Stellung nahe des Ballens 14 gebracht, in der das Garn 20 erfaßt und um den Ballen 14 mitgenommen wird. Während des Bindevorgangs wird die Garnführung 22 entlang der Ballenlängsachse bewegt, so daß Garn 20 spiralförmig über die gesamte Breite des Ballens 14 aufgelegt wird und den Ballen 14 gegen Auseinanderfallen sichert. Zum Ende des Bindevorgangs, das ebenfalls manuell oder automatisch bestimmt werden kann, wird der Ballen 14 angehalten, d. h. der Antrieb der ihn drehenden Preßelemente unterbrochen - automatisch oder manuell. Diese Situation ist in Figur 1 dargestellt, d. h. der Kolben 34 der Garnsicherungsvorrichtung 18 ist eingefahren und der Strang 26 erstreckt sich gespannt über den Führungsfinger 62 zwischen der Garnauslaßöffnung 24 und dem Seitenbereich des Ballens 14. Anschließend wird der Kolben 34 in Richtung auf den Ballen 14 ausgefahren, und die Spitze 36 erfaßt mit ihrem Garngreifer den Strang 26. Durch weiteres Ausfahren des Kolbens 34 wird die Spitze 36 tief in den Ballen 14 hineingestoßen und steckt somit das Garn 20, das weiterhin von einer nicht gezeigten Vorratsrolle durch die Garnführung 22 hindurch abgezogen wird, in das gepreßte Material hinein, wo es aufgrund der Reibung verharrt. Aufgrund des Widerstandes, den die Spitze 36 beim Stoßen in den Ballen 14 erfährt, bewegt sie sich mit der Welle 40 in das Rohr 48 hinein, was bewirkt, daß die Kurven 60 und 60' des Rohrs 48 und der Hülse 56 aufeinander gleiten und eine Relativdrehung zwischen beiden stattfindet. Während der Drehbewegung bewegt sich das Messer 58 an dem Garngreifer 38 entlang und durchtrennt den Strang 26. Diese Situation tritt kurz nach der in Figur 2 dargestellten ein. Schließlich wird der Kolben 34 wieder eingefahren und der Stempel 32 aus dem Ballen 14 herausgezogen. Dabei schiebt die Druckfeder 50 die Welle mit dem Stempel 32 wieder aus dem Rohr 48 und die Feder 46 zieht die Hülse 56 mit dem Messer 58 in die Ausgangsstellung zurück. Abschließend tritt die in Figur 1 gezeigt Situation wieder ein, wobei der Strang 26 allerdings durchtrennt ist und ein Ende lose von dem Führungsfinger 62 herabhängt, während das andere Ende in dem Ballen 14 steckt.

## Patentansprüche

1. Garnsicherungsvorrichtung (18) zum Sichern loser Enden von Garn (20) an einem Ballen (14) in einer Presse, insbesondere einer landwirtschaftlich nutzbaren Rundballen-presse (10), wobei das Garn (20) unter die Oberfläche des Ballens (14) eingedrückt wird, gekennzeichnet durch einen Stempel (32) mit einer einen Garngreifer (38) enthaltenden Spitze (36) zum Eindringen in die Umfangsfläche des Ballens (14), mit einem Motor (28) zum Einstoßen der Spitze (36) in den Ballen (14) und mit einer Schneidvorrichtung (58) zum Durchtrennen des Garns (20) im Hubbereich des Stempels (32).

2. Garnsicherungsvorrichtung nach Anspruch 1, dadurch gekennzeichnet, daß der Motor (28) einen linear verstellbaren Kolben (34) enthält, demgegenüber die Spitze (36) axial verschiebbar gelagert ist, wobei zwischen der Spitze (36) und dem Kolben (34) die Schneidvorrichtung (58) drehbar gelagert ist.

3. Garnsicherungsvorrichtung nach Anspruch 2, dadurch gekennzeichnet, daß die Schneidvorrichtung (54) auf einer Hülse (56) befestigt ist und die Hülse (56) mit einer Kurve (60') auf einer dazu passenden Kurve (60) eines auf dem Kolben (34) befestigten Rohrs (48) gleitend gelagert ist, die bei einer Lageänderung der Hülse (56) gegenüber dem Kolben (34) eine Drehbewegung bewirkt.

4. Garnsicherungsvorrichtung nach einem oder mehreren der vorherigen Ansprüche, dadurch gekennzeichnet, daß die Hülse (56) über eine Feder (46) an der Spitze (36) angreift und die Feder (46) bei einer Relativdrehbewegung zwischen der Spitze (36) und der Hülse (56) beaufschlagt wird.

5. Garnsicherungsvorrichtung nach einem oder mehreren der vorherigen Ansprüche, dadurch gekennzeichnet, daß die Spitze (36) mittels einer Welle (40) in dem Kolben (34) oder dem Rohr (48) axial beweglich gelagert ist, wobei sich zwischen der Welle (40) und dem Kolben (34) oder dem Rohr (48) eine Druckfeder (50) befindet und die Welle (40) gegenüber dem Kolben (34) oder dem Rohr (48) drehgesichert ist.

6. Garnsicherungsvorrichtung nach einem oder mehreren der vorherigen Ansprüche, dadurch gekennzeichnet, daß eine Steuervorrichtung (30) vorgesehen ist, die den Antrieb von Preßelementen zum Bilden des Ballens (14) unterbricht, bevor der Stempel (32) in den Ballen (14) bewegt wird.

7. Garnsicherungsvorrichtung nach Anspruch 6, dadurch gekennzeichnet, daß die Steuervorrichtung (30) die Stellung der Garnführung (22) erfaßt und die Bewegung des Stempels (32) nicht auslöst, bevor die Garnführung eine Endstellung eingenommen hat.

8. Garnsicherungsvorrichtung nach einem oder mehreren der vorherigen Ansprüche, dadurch gekennzeichnet, daß der Garngreifer (38) auf dem Stempel (32) als eine Nut ausgebildet ist, die über die Spitze (36) verläuft.

9. Garnsicherungsvorrichtung nach einem oder mehreren der vorherigen Ansprüche, dadurch gekennzeichnet, daß zwischen der Garnführung (22) und dem Ballen (14) im Bewegungsbereich des Stempels (32) ein Führungsfinger (62) für das Garn (20) vorgesehen ist.
